# EUROPÄISCHE PATENTSCHRIFT

(11) **EP 2 357 703 B1**
(45) Veröffentlichungstag und Bekanntmachung des Hinweises auf die Patenterteilung: **13.08.2014**
(21) Anmeldenummer: 11002373.6
(22) Anmeldetag: 02.10.2008
(51) Int. Cl.: H01M 8/10, H01M 8/04, H01M 8/06, H01M 12/08

(54) **Brennstoffzelle und Verfahren zum Herstellen einer Brennstoffzelle**
Fuel cell and method for producing a fuel cell
Pile à combustible et procédé de fabrication d'une pile à combustible

(30) Priorität: 10.10.2007 DE 102007048807
(43) Veröffentlichungstag der Anmeldung: 17.08.2011
(62) Teilanmeldung aus: 08017375.0
(73) Patentinhaber: Micronas GmbH, 79108 Freiburg (DE)
(72) Erfinder: Frank, Mirko, 72250 Freudenstadt (DE); Lehmann, Mirko, Dr., 9642 Ebnat-Kappel (CH); Reinecke, Holger, Prof.Dr., 79312 Emmendingen (DE); Erdler, Gilbert, Dr., 76275 Ettlingen (DE); Mueller, Claas, Dr., 79104 Freiburg (DE)
(74) Vertreter: Koch, Bertram

(56) Entgegenhaltungen:
- DE-A1-102004 011 554
- US-A1- 2002 106 541
- US-A1- 2006 088 739
- ERDLER G ET AL: "Chip integrated fuel cell", SENSORS AND ACTUATORS A, ELSEVIER SEQUOIA S.A., LAUSANNE, CH, Bd. 132, Nr. 1, 8. November 2006 (2006-11-08), Seiten 331-336, XP025081953, ISSN: 0924-4247 [gefunden am 2006-11-08]

## Beschreibung

Die Erfindung bezieht sich auf eine Brennstoffzelle mit den oberbegrifflichen Merkmalen gemäß Patentanspruch 1 bzw. auf ein Verfahren zum Herstellen einer derartigen Brennstoffzelle.

Zunehmend soll eine Erfassung von Messwerten an schwerzugänglichen oder mobilen Orten von autonomen Mikrosystemen übernommen werden. Derartige Mikrosysteme bestehen beispielsweise aus Sensoren, Aktoren, einer Signalverbreitungseinrlchtung und einer Energieversorgung, welche untereinander verschaltet sind. Zum Ausgeben verarbeiteter Messwerte weisen solche Mikrosysteme vorzugsweise auch eine Sendeinheit oder sonstige Schnittstelle zur Datenausgabe auf. Bisherige Entwicklungen in derartigen Themengebleten zeigen große Fortschritte bei Entwicklungen der Sensorik und der Aktorik In Bezug auf Miniaturisierungsfähigkeit und mit Blick auf eine Leistungsreduzierung. Bezüglich der Energieversorgung wurden jedoch keine ausreichenden Fortschritte erzielt.

Bei der Entwicklung von Intelligenten Mikrosystemen werden insbesondere integrierte Schaltkreise in CMOS-Technologie (CMOS: Complementary Metal Oxide Semiconductor / Komplementärer Metaloxid-Halbleiter) eingesetzt. Dabei werden gleichzeitig p- und n-Kanal-MOSFETs (Metal Oxide Semlconductor Field Effect Transistor / Metalloxld-Halbleiter- Feldeffekttransistor) zur Herstellung integrierter Schaltkreise eingesetzt. Beim Einsatz der CMOS-Technologie müssen alle Verwendeten Materialien und Prozesse CMOS-kompatibel sein wobei dies Insbesondere dann gilt, wenn ein CMOS-Prozess monolithisch auf einem Silizium-Chip durchgeführt werden soll. Allgemein sind für ein autonomes Mikrosystem wesentliche Aspekte, dass die verwendeten Speichermedien eine hohe Energledichte aufweisen sollen, die verwendeten Komponenten umweltverträglich sein sollen und eine Energieversorgung miniaturisierbar sowie kostengünstig sein soll.

Zur Energieversorgung sind Batterien, Akkumulatoren und Mikro-Brennstoffzellen bekannt. Brennstoffzellensysteme sind als makroskopische Energiesysteme bereits etabliert. Mit fortschreftendem Miniaturisierungsgrad wird es technologisch jedoch zunehmend aufwendiger, bei mechanischen Bautellern wie Ventilen und Druckreglern, welche aus beweglichen Teilen bestehen, Passungen und Führungen mit ausreichend guten Toleranzen zu fertigen. Deshalb beschränken sich bisherige Miniaturisierungsversuche von Brennstoffzellen vor allem auf die eigentliche Brennstoffzelle. In der Literatur gibt es allgemein mehrere Ansätze, PEM-Brennstoffzellen (PEM: Protone Exchange Membrane / protonenleitfähige Membran) In SIIIzium-Technologie herzustellen. Dabei werden zur Energieversorgung separate Wasserstoffspeiche bereitgestellt, Insbesondere eingesetzt.

Einen Vorschlag zum Aufbau einer miniaturisierten Brennstoffzelle ist aus: Erdler G et al: "Chip integrated fuel cell" in Sensors and Actuators A, Elsevier Sequoia S.A., Lausanne, Ch, Bd. 132, Nr. 1, 8. November 2006 (2006-11-08), Seiten 331-336, XP025081953, ISSN: 0924-4247 bekannt. Bei einer Ausführungsform wird, ausgehend von einer Kavität In einem Silizium-Substrat unter dem Palladium Speicher eine Goldschicht zum anodenseitigen Anschluss des Speichers aufgebracht.

Bekannt sind außerdem Direkt-Methanol-Brennstoffzellen, welche als passive Systeme aufgebaut sind, wobei das Oxidationsmittel Methanol aus einem Vorratstank über Kapillarkräfte der Anode der Brennstoffzelle zugeführt wird. Die bei der Umsetzung des Methanols entstehenden CO2-Gasblasen werden ebenfalls über Kapillarkräfte abgeführt.

Die Aufgabe der Erfindung besteht darin, eine alternative Brennstoffzelle bzw. ein Verfahren zur deren Herstellung vorzuschlagen, wobei eine Miniaturisierung inklusive einem Wasserstoffspeicher ermöglicht werden soll. Insbesondere soll eine monolithische Umsetzung in Verbindung mit CMOS-Technologie ermöglicht werden.

Diese Aufgabe wird gelöst durch die Brennstoffzelle mit den Merkmalen gemäß Patentanspruch 1. Außerdem vorteilhaft Ist einen monolithische Anordnung in CMOS-Technologie mit einer integrierten derartigen Brennstoffzelle. Vorteilhafte Ausgestaltungen sind Gegenstand abhängiger Ansprüche.

Demgemäß wird eine Brennstoffzelle mit einem Speicher zum Speichern von Wasserstoff, einer protonenleitfähigen Schicht, welche eine Oberfläche des Speichers überdeckt, und einer Kathode an einer dem Speicher gegenüberliegenden Seite der protonenleitfähtgen Schicht, wobei der Speicher direkt an eine Anode angekoppelt ist, der Speicher selber eine Anode ausbildet und der Speicher in bzw. auf einem Substrat eines Halbleiters eingearbeitet ist.

Bevorzugt wird eine Brennstoffzelle bei welcher der Speicher mit dem Substrat zumindest über eine Stress-Kompensationsschicht verbunden ist. Die Stress- Kompensationsschicht ist vorteilhaft aus einem duktilen Material ausgebildet, Insbesondere aus Zinn, Gold, Silber, Biel, Kadmium oder Indium. Zinn wird wegen der Umweltverträglichkeit besonders bevorzugt.

Bevorzugt wird eine Brennstoffzelle, bei welcher die Stress-Kompensationsschicht in allen Bereichen einer direkten Nachbarschaft des Substrats und des Speichers für den Wasserstoff ausgebildet ist. Mit anderen Worten ist die Stress-Kompensationsschicht zu allen Seiten hin um den Speicher herum ausgebildet, zu denen das Substrat direkt oder über weitere zwischengeschaltete Schichten zum Speicher benachbart angeordnet ist. Im Fall einer Wannenstruktur im Substrat, in welcher der Speicher aufgenommen ist, erstreckt sich die Stress-Kompensationssicht entsprechend über die Wandungsbereiche innerhalb der Wanne zwischen dem Speicher und dem Substrat.

Bevorzugt wird eine Brennstoffzelle, bei welcher eine Diffusionsbarriere zwischen dem Speicher und dem Substrat derart ausgebildet ist, dass Wasserstoff reduziert oder vorzugsweise gar nicht vom Speicher zum Substrat hin austreten kann. Die Diffusionsbarriere kann dazu insbesondere aus Siliziumnitrid und/oder Siliziumoxid und/oder einer Oxynitridschicht ausgebildet sein.

Bevorzugt wird eine Brennstoffzelle, bei welcher die Diffusionsbarriere In allen Bereichen einer direkten Nachbarschaft des Substrats und des Speichers zum Aufnehmen des Wasserstoffs und gegebenenfalls anderen Schichten ausgebildet ist. Entsprechend ist der Speicher vorzugsweise zusätzlich auch von einer Diffusionsbarriere umgeben, welche einen Durchtritt von Wasserstoff aus dem Speicher zum Substrat hemmt oder vorzugsweise unterbindet.

Bevorzugt wird eine Brennstoffzelle, bei welcher der Speicher in einem Teil seines Umfangsbereichs von einer protonenleitfähigen und wasserstoffnichtieitfähigen Schicht und in den übrigen Bereichen seines Umfangs von einer Diffusionsbarriere für Wasserstoff vollständig umgeben ist. Eine solche Anordnung stellt sicher, dass Wasserstoff nicht mit der Zeit aus dem Wasserstoffspeicher herausdiffundieren kann.

Bevorzugt wird eine Brennstoffzelle, bei welcher an einer Seite der protonenleitfähigen Schicht der Speicher anliegt und bei welcher auf der dazu gegenüberliegenden Seite eine selbstatmende Luftdiffusionsschicht als die Kathode ausgebildet ist, wobei die selbstatmende Luftdiffusionsschicht ausreichend porös für Luftdurchtritt, insbesondere für Sauerstoffdurchtritt ist.

Der wasserstoff-aufnahmefähige Speicher ist eingebettet in einer Kavität oder Grube Innerhalb eines Substrats, vorzugsweise aus Silizium, wobei zwischen einer zueinander benachbarten Oberfläche des Speichers und des Substrats eine Stress-Kompensationsschicht und eine Diffusionsbarriere für Wasserstoff ausgebildet ist.

Bevorzugt wird demgemäß außerdem ein Verfahren zum Herstellen einer Brennstoffzelle, bei welchem in einem Substrat, vorzugsweise aus Silizium, eine Kavität oder Grube ausgebildet wird, in der Kavität eine Stress-Kompensationsschicht aus einem duktilen Material, Insbesondere Zinn, und eine Diffusionsbarriere zum Hemmen oder Sperren des Durchtritts von Wasserstoff ausgebildet wird, die verbleibende Kavität mit einem Speicher bevorzugt aus Palladium gefüllt wird, die Struktur aus der Diffusionsbarriere, der Stress-Kompensationsschicht und dem Speicher mit einer protonenleitfähigen und wasserstoff-nichtleitfähigen Schicht, insbesondere einer Polymer-Elektrolytmembran, an einer verbleibenden freien Oberfläche abgedeckt wird und auf der gegenüberilegenden Seite der protonenleitfähigen Schicht eine Kathode ausgebildet wird, wobei die Kathode Luft und/oder Sauerstoff hindurch treten lässt.

Eine solche Brennstoffzelle ist überraschend einfach herstellbar und bietet eine Vielzahl von Vorteilen. So kann auf einfache Art und Weise die Masse des der Brennstoffzelle zugeführten Wasserstoffs über die Materialeigenschaften der Oberfläche des Wasserstoffspelchers sowie über die Kontaktfläche zwischen Wasserstoffspeicher und Brennstoffzelle gesteuert werden. Der Wasserstoff gelangt vorteilhaft direkt über Diffusion aus dem Wasserstoffspelcher zur MEA (MEA: Membran-Elektrode-Einheit) Die Realisierung als selbstatmendes System, das heißt die Verwendung von Luftsauerstoff aus der direkten Umgebung, ermöglicht, das Brennstoffzellensystem vollständig ohne aktive Komponenten wie Leitungssystem und Ventilen aufzubauen.

Eine derartige Brennstoffzelle inklusive dem Speicher für den Wasserstoff eignet sich aufgrund des sehr einfachen Aufbaus besonders gut zur Miniaturisierung. Wird die Brennstoffzelle aus CMOS-kompatiblen Materialen aufgebaut, kann die Brennstoffzelle inklusive dem Speicher für den Wasserstoff monolithisch auf Chip-Ebene integriert werden.

Vorteilhaft an einem solchen Brennstoffzellen-Aufbau gegenüber anderen elektrischen Energiequellen, beispielsweise Akkumulatoren, ist, dass die Kapazität und die Leistung getrennt voneinander eingestellt werden können. Die Kapazität der neu aufgebauten Brennstoffzelle wird bei fester Fläche bzw. festem Volumen über die Schichtdicke des Integrierten Wasserstoffspelchers eingestellt. Die Leistung ergibt sich aus der Kontaktfläche zwischen dem Integrierten Wasserstoffspeicher und der Polymer-Elektrolytmembran.

Ein Ausführungsbeisplel wird nachfolgend anhand der Zeichnung näher erläutert. Es zeigen:
- Fig. 1: schematisch eine Seitenansicht einer geschnittenen Brennstoffzelle sowie In einzelnen der Brennstoffzellenbereiche Reaktionsformeln zur Veranschaulichung des Ablaufs,
- Fig. 2: die Brennstoffzelle gemäß Fig. 1 In Schnittdarstellung; und
- Fig. 3: Verfahrensschritte zur Herstellung einer solchen Brennstoffzelle.

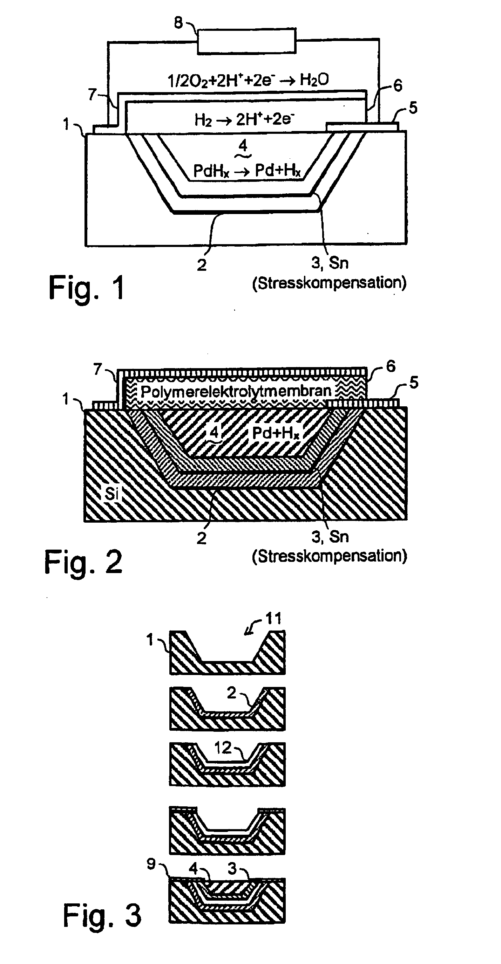

Fig. 1 und 2 zeigen in verschiedenen Darstellungsarten einen Schnitt durch eine Halbleiteranordnung mit einer integrierten Brennstoffzelle. Eine verbesserte Miniaturisierung wird dadurch erreicht, dass ein Brennstoffzellensystem direkt auf oder in einem Silizium-Chip integriert ist. Bisher getrennte Komponenten sind dabei zu neuen Funktionseinheiten zusammengefasst. Insbesondere ist dabei ein Wasserstoffspeicher direkt In den Brennstoffzellenaufbau integriert. Der Wasserstoffspeicher wird direkt an eine Anode der Brennstoffzelle angekoppelt.

In einem Substrat 1 aus Silizium ist eine Grube ausgebildet, welche mit verschiedenen Schichten und Materialien gefüllt ist. Direkt dem Substrat 1 benachbart befindet sich eine Diffusionsbarriere 2, welche einen Durchtritt von Wasserstoff reduzieren oder verhindern soll. Durch das Substrat 1 folgt jenseits der Diffusionsbarriere 2 eine Stress-Kompensationsschicht 3 aus Insbesondere Zinn. Der Stress-Kompensationsschicht 3 folgt ein Speicher 4 als Wasserstoffspeicher, welcher zugleich eine Anode ausbildet. Als Material für den Speicher 4 wird Palladium bevorzugt verwendet. Vorzugsweise ist die Anordnung der Diffusionsbarriere 2 und der Stress-Kompensationsschicht 3 so gewählt, dass diese wannenförmig in der Grube angeordnet sind und mit ihren oberen außenseitigen Rändern auf gleicher Höhe abschließen, wie eine Oberfläche des außenseitig dazu benachbarten Substrats 1. Auch der Speicher 4 weist eine Oberfläche auf, welche vorzugsweise plan mit den Oberflächen des Substrats 1, der Diffusionsbarriere 2 und der Stress-Kompensationsschicht 3 abschließt. In Richtung des Substrats 1 ist der Speicher 4 dadurch vollständig von erst der Stress-Kompensationsschicht 3 und dann der Diffusionsbarriere 2 umgeben.

Beim Beladen des Speichers 4 mit Wasserstoff bzw. beim Entladen des Speichers 4 erfährt dieser eine Ausdehnung bzw. Schrumpfung um bis zu ca. 12%. Die Stress-Kompensatlonsschicht 3 besteht aus einem Material und einer Dimenslonierung, welche die Ausdehnung bzw. das Zusammenziehen des Speichers 4 derart kompensieren, dass eine Ablösung der Anordnung vom Substrat 1 und/oder eine Rissbildung im Substrat 1 verhindert wird. Gemäß erster Versuche hat sich beispielsweise eine Stress-Kompensationsschicht 3 mit einer Schichtdicke von 70 µm bei einer Schichtdicke von 130 µm für den Speicher 4 als geeignet gezeigt.

Oberhalb dieser Anordnung befindet sich ein Anodenkontakt 5, welcher zum elektrischen Kontaktieren der durch den Speicher 4 ausgebildeten Anode von einem oberseitigen Randbereich des Speichers 4 über die oberseitigen Randabschnitte der Stress-Kompensationsschicht 3 und der Diffusionsbarriere 2 auf die Oberfläche des Substrats 1 ragt, um einen elektrischen Anschluss der Anode zu ermöglichen. Außerdem ist die Oberfläche der gesamten Anordnung aus dem Speicher 4 und den oberseitigen bzw. außenseitigen Randabschnitten der diesen umgebenden Stress-Kompensationsschicht 3 und Diffusionsbarriere 2 mit einer Membran 6 überdeckt, welche als eine Polymer-Elektrolytmembran bzw. protonenleitfähige Schicht ausgebildet ist. Die Membran 6 ist vorzugsweise vollständig auf der dieser Anordnung gegenüberliegenden und somit außenseitigen Seite der Membran 6 von einer Kathode 7 als einem zweiten elektrischen Anschlusskontakt überdeckt. Die Kathode 7 ragt vorzugsweise an zumindest einem Umfangsrandabschnitt seitlich der Membran 6 bis auf das Substrat 1 und führt ein Stück parallel über die Oberfläche des Substrat 1, um einen Anschlusskontaktpunkt auszubilden. Ein elektrischer Verbraucher 8 kann somit an die Kathode 7 und an den Anodenkontakt 5 angeschlossen werden, um mit elektrischer Leistung versorgt zu werden.

Im Fall der besonders bevorzugten Anordnung handelt es sich bei dem Speicher 4 um einen Wasserstoffspeicher aus Palladium Pd, welcher mit Wasserstoff angefüllt ist. Beim Anschließen einer elektrischen Last, wie dem Verbraucher 8, wird in dem Speicher 4 entsprechend PdHₓ umgesetzt zu Pd+Hₓ. In der Membran 6 erfolgt ein Übergang von Wasserstoff zu Protonen und Elektronen. Durch Reaktion mit Luftsauerstoff, welcher außenseitig über die Kathode 7 zugeführt wird, entsteht an der Kathode 7 Wasser H₂O durch die Reaktion 1/20₂ + 2H⁺ + 2e⁻.

Bei einer solchen Anordnung ist der Speicher 4 auf Palladlum-Basis direkt auf dem Substrat 1 auf Silizium-Basis aufgebracht und fest damit verbunden. Wasserstoffspeicher ist somit direkt auf einem Chip integrierbar. Um eine Langzeitstabilität der Wasserstoffspeicherung im Palladium des Speichers 4 sicherzustellen, sind alle Flächen, welche keinen Kontakt zu der Brennstoffzelle, dass heißt der Membran 6, aufweisen, mit der Diffusionsbarriere 2 über der Umgebung abgeschirmt, um eine Wasserstoffdiffusion zu unterdrücken oder zu verhindern.

Um einen Wasserstoffaustritt im Bereich der Oberseite zu verhindern, überdeckt die Membran 6 die gesamte Oberfläche sowohl des Speichers 4 als auch der weiteren im Oberflächenbereich angrenzenden Komponenten bzw. Schichten bis hin zu der Diffusionsbarriere 2. Die Membran 6 ist dabei vorzugsweise für Wasserstoff gasdicht und vollflächig an den Speicher 4 angekoppelt.

Vorzugsweise kann eine solche Diffusionsbarriere 2, welche als Wasserstoff-Diffusionsbarriereschicht dienen soll, durch Siliziumnitridschichten oder Oxynitrldschichten mittels CVD (Chemical Vapour Deposition / Chemische Gasphasenabscheidung) abgeschieden werden. Eine gute Haftung zum Substrat 1 aus Silizium wurde bei ersten Versuchen durch eine Kombination von Polysilizium und Palladium mit anschließender Palladium-Silizidbildung erreicht.

Bei der dargestellten Ausführungsform ist zwischen die Diffusionsbarriere 2 und den Speicher 4 zusätzlich die Stress-Kompensationsschicht 3 gelegt, entstehende Spannungen aufgrund einer Volumenvergrößerung des Speichers 4 aus Palladium bei Beladung mit Wasserstoff zu kompensieren oder zumindest ausreichend zu reduzieren. Dadurch werden CMOS-kompatible Lösungen bei der Fertigung ermöglicht. Die bei der Wasserstoffbeladung und Wasserstoffentladung des integrierten Speichers 4 entstehenden mechanischen Spannungen an der Grenzfläche zum Substrat 1 aus Silizium werden durch eine vorzugsweise galvanisch abgeschiedene Zinnschicht kompensiert, welche die Stress-Kompensationsschicht 3 ausbildet.

Alternativ können die Stress-Kompensationsschicht 3 und die Diffusionsbarriere 2 jedoch auch in umgekehrter Reihenfolge zwischen dem Substrat 1 und dem Speicher 4 ausgebildet bzw. angeordnet werden.

Bei einer solchen Anordnung diffundiert nach dem Anschließen einer Last wie dem Verbraucher 8 der im Palladium des Speichers 4 gespeicherte Wasserstoff in atomarer Form an die Grenzfläche zwischen der angekoppelten Membran 6 und dem Speicher 4. Aufgrund der katalytischen Wirkung von Palladium disoziiert der Wasserstoff in ein Proton und ein Elektron. Die Protonen durchwandern die Polymer-Elektrolytmembran, während die Elektronen über den zu betreibenden Verbraucher 8 zu Kathode 7 der Brennstoffzelle gelangen. An der Kathode 7 reagieren die Protonen mit den Elektronen und dem Luftsauerstoff aus der Umgebung zu Wasser.

Die Stress-Kompensationsschicht 3 soll ein möglichst kleines E-Modul aufweisen, um die mechanischen Spannungen zum Substrat 1 zu reduzieren. Zur Kompensation der mechanischen Spannungen des Palladiumspeichers wird daher für die Stress-Kompensationsschicht 3 ein möglichst duktiles und reversibel verformbares Material gewählt. Außerdem soll das Material der Stress-Kompensationsschicht 3 eine gute Haftfestigkeit sowohl zum Speicher 4 aus Palladium als auch zum Substrat 1 aus Silizium bzw. zu den auf dem Substrat 1 aufgebrachten Dunnschichten, welche üblicherweise zwischengeschaltet sind, aufweisen. Außerdem werden vorzugsweise Materialien verwendet, welche mit halbleitertechnologischen oder kompatiblen Verfahren abscheidbar sind oder im Falle höherer Schichtendicken mittels Dickschichtprozessen wie beispielsweise Galvanik, Siebdruck oder Castingprozessen herstellbar sind. Vorzugsweise sollen die verwendeten Materialien zum Ausbilden der Stress-Kompensationsschicht 3 außerdem umweitverträglich sein. Diese Bedingungen werden durch duktile Materialien wie Insbesondere Gold, Silber, Blei, Kadmium, Indium oder Zinn erfüllt. Mit Blick auf Umweitverträglichkeit und eine kostengünstige Herstellung wird Zinn besonders bevorzugt. Dadurch wird ein Brennstoffzellensystem bereitgestellt, welches im Wesentlichen aus Silizium, Palladium, einer Polymer-Elektrolytmembran mit Palladium-Stromkollektor und Zinn ausgebildet ist. Bei dieser Materialwahl handelt es sich vorteilhafterweise um die Umwelt nichtschädigende Stoffe.

Fig. 3 zeigt von oben nach unten eine Abfolge von Herstellungsschritten bei der Herstellung einer derartigen Brennstoffzelle. In einem ersten Verfahrensschritt wird in dem Substrat 1 eine Grube 11 ausgebildet, was beispielsweise durch nass-chemisches Ätzen mit KOH- oder Trockenätzen durchgeführt werden kann. Übliche Herstellungsschritte sind dabei ein Maskieren der Siliziumoberfläche, ein Öffnen der Maskierung in dem gewünschten Bereich, in welchem der Speicher 4 ausgebildet werden soll, eine Herstellung der Kavität der Grube 11 und ein Entfernen der verwendeten Masklerschichten.

In einem nächsten Verfahrensschritt wird die Diffusionsbarriere 2, das heißt die Barriere für Wasserstoff, an den Wänden der Grube 11 ausgebildet. Dies kann insbesondere durch das Herstellen einer Oxidschicht aus SiO und der nachfolgenden Herstellung der eigentlichen Nitridschicht mit CVD zu SI3N4 erfolgen.

Nachfolgend werden vorzugsweise eine Haftvermittierschicht, vorzugsweise aus Polysilizium, welche vorzugsweise über CVD-Prozesse hergestellt wird und eine Galvanikstartschicht, vorzugsweise aus Palladium, welche vorzugsweise mittels PVD-Verfahren (PVD: Physical Vapour Deposition / Physikalisches Aufdampfen) aufgebracht wird, abgeschieden. Durch Tempern erfolgt die eigentliche Pd-Silizid-Bildung. Poly-Silizium dient gemäß Standard-CMOS-Verfahren als Heftschicht für Palladium. Palladium wird an der Grenze zum Palladium-Silizid gebildet, weil darunter Poly-Silizium ist. Das Poly-Silizium bildet somit eine Haftvermittlerschicht 12 aus. In erster Linie dient dies zu Kontaktierung, wobei vor allem auch eine Verstärkung mit Aluminium möglich ist.

In einem weiteren dargestellten Verfahrensschritt wird die eigentliche Stress-Kompensationsschicht 3 in der Grube 11 auf dem in dieser befindlichen Schichtaufbau ausgebildet. Nach einer Maskierung der SiliziumOberfläche des Substrats 1 mittels üblicher Lithografie-Prozesse wird die eigentliche Stress-Kompensatlonsschicht 3 aus Zinn Sn mittels eines Galvanlkverfahrens aufgetragen.

Nach dem Herstellen der Stress-Kompensationsschicht 3 wird der eigentliche Speicher 4 aus Palladium Pd mittels eines üblichen Pd-Galvanikverfahrens in der verbleibenden Grube 11 ausgebildet. Abschließend erfolgt ein Planarisieren der Oberfläche mittels einer Pollermaschine, um eine einheitliche Oberfläche über das Substrat 1, den Speicher 4 und die zwischen diesen an die Oberfläche ragenden Ränder der Stress-Kompensationsschicht 3 und der Diffusionsbarriere 2 zu erlangen. Letztendlich erfolgt ein Kontaktieren des Speichers 4 durch beispielsweise eine entsprechende Maskierung der Oberfläche mittels eines Lithografie-Verfahrens, die Herstellung einer Goldschicht zum Ausbilden der Kontakte mittels beispielweise PVD durch Aufdampfen und letztendlich eine Strukturierung von Goldleiterbahnen aus der Goldschicht 9.

Nachdem das Palladium als Anode bzw. Speicher 4 in die Grube 11 eingefüllt ist, bzw. vor dem Aufbringen der Membran 6 wird der Speicher 4 mit Wasserstoff gefüllt. Dabei diffundiert Wasserstoff in das Palladium ein. Nachfolgend wird die protonenleitfähige Membran 6 als Abdeckung aufgebracht, welche einerseits keinen Wasserstoff hindurch lässt, andererseits aber Protonen hindurch lässt. Das strukturieren kann ebenfalls mittels üblicher Verfahrensschritte aus CMOS-Prozessen durchgeführt werden, beispielsweise unter Einsatz eines RIE-Prozesses (RIE: Reactive Ion Etching / reaktives Ionenätzen). Vorteilhaft ist der Einsatz von Hilfsschichten, die als Schutzfunktion für das Siliziumsubstrat dienen können. Eine Haftung der Polymerelektrolytmembran zum Palladiumspeicher wird vorzugsweise durch den Einsatz einer Haftvermittlersubstanz, welche der Polymerdispersion hinzugeführt wird, erreicht. Vorteilhafterweise liegt so bereits atomarer Wasserstoff im Palladium des Speichers 4 bzw. der Anode vor dem Abdecken mit der Membran 6 vor.

Nachfolgend werden die Polymer-Elektrolytmembran als die Membran 6 und die Kathode 7 auf der Oberfläche des Substrats 1 bzw. der in der Grube 11 eingebrachten Materialien ausgebildet. Um eine halbleiter-technologische Realisierung einer selbstatmenden Luftdiffusionsschicht auszubilden, wird diese bevorzugt aus einem Stromkollektor zur elektrischen Rückführung auf das Substrat 1 und einer feinen katalytisch aktiven Palladium-Lamellenstruktur auf der Membran 6 aufgebracht. Die Palladium-Lamellenstruktur bildet gleichzeitig die selbstatmende Luftdiffusionsschicht und die Kathode 7 der Brennstoffzelle aus. Zur Strukturierung des Palladium-Stromkollektors und der Palladium-Luftdlffusionselektrode können mikrostrukturlerte Sputtermasken eingesetzt werden, welche mit einem Advanced Silicon Etching-Tiefenätzprozess aus beispielsweise 300 µm dicken Sllizium-Wafern hergestellt werden. Bei ersten Versuchen betrug eine Stegweite der ausgebildeten Lamellenstruktur 100 µm. Ein derartiger mikro-strukturierter Palladium-Katalysator ist hochporös und damit für Luft durchlässig. Als geeignete elektrische Isolationsschicht zwischen der Anode und der Kathode wurde gemäß erster Versuche eine CVD-Siliziumnitridschicht verwendet.

## Patentansprüche

1. Brennstoffzelle, mit
- einem Speicher (4) zum Speichern von Wasserstoff (Hx),
- einer protonenleitfähigen Schicht, welche eine Oberfläche des Speichers (4) überdeckt, und
- einer Kathode (7) an einer dem Speicher (4) gegenüberliegenden Seite der protonenleitfähigen Schicht, wobei
- der wasserstoff-aufnahmefähige Speicher (4) direkt an der Anode angekoppelt ist, der Speicher (4) selbst eine Anode ausbildet und in einer Kavität oder Grube (11) innerhalb eines Substrats (1) aus Silizium eingebettet ist, zwischen dem Speicher (4) und dem Substrat (1) eine Wasserstoff-Diffusionsbarriere (2) ausgebildet ist,
**dadurch gekennzeichnet, dass**
zwischen dem Speicher (4) und dem Substrat (1) eine Stress-Kompensationsschicht (3) ausgebildet ist.

2. Brennstoffzelle nach Anspruch 1, **dadurch gekennzeichnet, dass** die Stress-Kompensationsschicht (3) zwischen der Wasserstoff-Diffusionsbarriere (2) und dem Speicher (4) ausgebildet ist.

3. Brennstoffzelle nach Anspruch 1, **dadurch gekennzeichnet, dass** die Stress-Kompensationsschicht (3) zwischen der Wasserstoff-Diffuslonsbarriere (2) und dem Substrat (1) ausgebildet ist.

4. Brennstoffzelle nach Anspruch 2, **dadurch gekennzeichnet, dass** zwischen der Wasserstoff-Diffusionsbarriere (2) und der Stress-Kompensationsschicht (3) eine Haftvermittlerschicht (12) ausgebildet ist.

5. Brennstoffzelle nach Anspruch 4, **dadurch gekennzeichnet, dass** die Haftvermittlerschicht (12) aus Polysilizium und einer Galvanikstartschicht ausgebildet ist.

6. Brennstoffzelle nach Anspruch 5, **dadurch gekennzeichnet, dass** die Galvanikstartschicht aus Palladium besteht und dass sich durch Tempern gebildetes Palladium-Silizid an der Grenze zwischen Palladium und Polysilizium befindet.

7. Brennstoffzelle nach einem der Ansprüche 1 bis 6, **dadurch gekennzeichnet, dass** die Stress-Kompensationsschicht (3) aus einem duktilen Material, insbesondere Zinn, Gold, Silber, Blei, Kadmium, oder Indium ausgebildet ist.

8. Brennstoffzelle nach einem der Ansprüche 1 bis 7, **dadurch gekennzeichnet, dass** die Stress-Kompensationsschicht (3) in allen Bereichen in einer direkten Nachbarschaft des Substrats (1) und des Speichers (4) ausgebildet ist.

9. Brennstoffzelle nach einem der Ansprüche 1 bis 8, **dadurch gekennzeichnet, dass** die Wasserstoff-Diffusionsbarriere (2) zwischen dem Speicher (4) und dem Substrat (1) derart ausgebildet ist, dass Wasserstoff (H2) reduziert oder nicht vom Speicher (4) zum Substrat (1) austreten kann.

10. Brennstoffzelle nach einem der Ansprüche 1 bis 9, **dadurch gekennzeichnet, dass** die Wasserstoff-Diffusionsbarriere (2) aus Siliziumnitrid und / oder Siliziumoxid und / oder einer Oxynitridschicht ausgebildet ist.

11. Brennstoffzelle nach einem der Ansprüche 1 bis 10, **dadurch gekennzeichnet, dass** der Speicher (4) in einem Teil seines Umfangsbereichs von einer protonenleitfähigen und wasserstoff-nichtleitfähigen Schicht und in den übrigen Bereichen seines Umfangs von einer Wasserstoff-Diffusionsbarriere (2) für Wasserstoff vollständig umgeben ist.

12. Brennstoffzelle nach einem der Ansprüche 1 bis 11, **dadurch gekennzeichnet, dass** an einer Seite der protonenleitfähigen Schicht der Speicher (4) anliegt und bei welcher auf der dazu gegenüberliegenden Seite eine selbstatmende luftdiffusionsschicht als die Kathode (7) ausgebildet ist, wobei die selbstatmende Luftdiffusionsschicht ausreichend porös für Luftdurchtritt, insbesondere für Sauerstoffdurchtritt ist.

13. Brennstoffzelle n ach einem der Ansprüche 1 bis 12, **dadurch gekennzeichnet, dass** die Kathode (7) an zumindest einem Umfangsrandabschnitt seitlich der protonenleltfähigen Schicht bis auf das Substrat (1) ragt.

14. Brennstoffzelle nach einem der Ansprüche 1 bis 13, **dadurch gekennzeichnet, dass** ein Anodenkontakt (5) ausgebildet ist, welcher von einem oberseitigen Randbereich des Speichers (4) über oberseitige Randabschnitte der Stress-Kompensationsschicht (3) und der Diffusionsbarriere (2) auf die Oberfläche des Substrats (1) ragt.

15. Monolithische Anordnung in CMOS-Technologie mit einer integrierten derartigen Brennstoffzelle nach einem der Ansprüche 1 bis 14.

## Claims

1. Fuel cell, comprising
- a store (4) for storing hydrogen (Hₓ),
- a proton-conductive layer covering a surface of the store (4) and
- a cathode (7) at a side, which is opposite the store (4), of the proton-conductive layer, wherein
- the store (4) capable of accepting hydrogen is directly coupled to the anode, the store (4) itself forms an anode and is embedded in a cavity or pit (11) within a substrate (1) of silicon, and a hydrogen diffusion barrier (2) is formed between the store (4) and the substrate (1),
**characterised in that**
a stress compensation layer (3) is formed between the store (4) and the substrate (1).

2. Fuel cell according to claim 1, **characterised in that** the stress compensation layer (3) is formed between the hydrogen diffusion barrier (2) and the store (4).

3. Fuel cell according to claim 1, **characterised in that** the stress compensation layer (3) is formed between the hydrogen diffusion barrier (2) and the substrate (1).

4. Fuel cell according to claim 2, **characterised in that** an adhesion-promoting layer (12) is formed between the hydrogen diffusion barrier (2) and the stress compensation layer (3).

5. Fuel cell according to claim 4, **characterised in that** the adhesion-promoting layer (12) is formed from polysilicon and a plating start layer.

6. Fuel cell according to claim 5, **characterised in that** the plating start layer consists of palladium and that palladium silicide formed by tempering is present at the boundary between palladium and polysilicon.

7. Fuel cell according to any one of claims 1 to 6, **characterised in that** the stress compensation layer (3) is formed from a ductile material, particularly tin, gold, silver, lead, cadmium or indium.

8. Fuel cell according to any one of claims 1 to 7, **characterised in that** the stress compensation layer (3) is formed in all regions in the direct vicinity of the substrate (1) and the store (4).

9. Fuel cell according to any one of claims 1 to 8, **characterised in that** the hydrogen diffusion barrier (2) is so formed between the store (4) and the substrate (1) that hydrogen (H₂) reduces or cannot escape from the store (4) to the substrate (1).

10. Fuel cell according to any one of claims 1 to 9, **characterised in that** the hydrogen diffusion barrier (2) is formed from silicon nitride and/or silicon oxide and/or an oxynitride layer.

11. Fuel cell according to any one of claims 1 to 10, **characterised in that** the store (4) is completely surrounded in a part of its circumferential region by a proton-conductive and hydrogen-non-conductive layer and in the remaining regions of its circumference is completely surrounded by a hydrogen diffusion barrier (2) for hydrogen.

12. Fuel cell according to any one of claims 1 to 11, **characterised in that** the store (4) lies against one side of the proton-conductive layer and on the side opposite thereto a self-respiratory air diffusion layer is constructed as a cathode (7), wherein the self-respiratory air diffusion layer is sufficiently porous for the passage of air, particularly for the passage of oxygen.

13. Fuel cell according to any one of claims 1 to 12, **characterised in that** the cathode (7) projects at at least one circumferential edge section laterally of the proton-conductive layer up to the substrate (1).

14. Fuel cell according to any one of claims 1 to 13, **characterised in that** an anode contact (5) is formed, which projects from an upper-side edge region of the store (4) beyond upper-side edge sections of the stress compensation layer (3) and the diffusion barrier (2) to the surface of the substrate (1).

15. Monolithic arrangement in CMOS technology with an integrated fuel cell of that kind according to any one of claims 1 to 14.

## Revendications

1. Pile à combustible, avec
- un réservoir (4) pour stocker de l'hydrogène (Hx),
- une couche conductrice de protons, qui recouvre une surface du réservoir (4), et
- une cathode (7) sur une face de la couche conductrice de protons située à l'opposé du réservoir (4),
dans laquelle
- le réservoir pouvant contenir de l'hydrogène (4) est couplé directement à l'anode, le réservoir formant lui-même une anode et étant logé dans une cavité ou une fosse (11) à l'intérieur d'un substrat (1) en silicium, une barrière de diffusion de l'hydrogène (2) étant formée entre le réservoir (4) et le substrat (1),
**caractérisée en ce qu'**une couche de compensation de contrainte (3) est formée entre le réservoir (4) et le substrat (1).

2. Pile à combustible selon la revendication 1, **caractérisée en ce que** la couche de compensation de contrainte (3) est formée entre la barrière de diffusion de l'hydrogène (2) et le réservoir (4).

3. Pile à combustible selon la revendication 1, **caractérisée en ce que** la couche de compensation de contrainte (3) est formée entre la barrière de diffusion de l'hydrogène (2) et le substrat (1).

4. Pile à combustible selon la revendication 2, **caractérisée en ce qu'**une couche d'agent adhésif (12) est formée entre la barrière de diffusion de l'hydrogène (2) et la couche de compensation de contrainte (3).

5. Pile à combustible selon la revendication 4, **caractérisée en ce que** la couche d'agent adhésif (12) est formée de polysilicium et d'une couche de démarrage de galvanoplastie.

6. Pile à combustible selon la revendication 5, **caractérisée en ce que** la couche de démarrage de galvanoplastie se compose de palladium et **en ce qu'**il se trouve du siliciure de palladium formé par vieillissement à la limite entre le palladium et le polysilicium.

7. Pile à combustible selon l'une quelconque des revendications 1 à 6, **caractérisée en ce que** la couche de compensation de contrainte (3) est formée en un matériau ductile, en particulier en étain, or, argent, plomb, cadmium ou indium.

8. Pile à combustible selon l'une quelconque des revendications 1 à 7, **caractérisée en ce que** la couche de compensation de contrainte (3) est formée dans toutes les zones à proximité immédiate du substrat (1) et du réservoir (4).

9. Pile à combustible selon l'une quelconque des revendications 1 à 8, **caractérisée en ce que** la barrière de diffusion de l'hydrogène (2) est formée entre le réservoir (4) et le substrat (1) de telle manière que l'hydrogène (H2) ne puisse pas du tout s'échapper du réservoir (4) vers le substrat (1) ou uniquement de façon réduite.

10. Pile à combustible selon l'une quelconque des revendications 1 à 9, **caractérisée en ce que** la barrière de diffusion de l'hydrogène (2) est formée par du nitrure de silicium et/ou de l'oxyde de silicium et/ou une couche d'oxynitrure.

11. Pile à combustible selon l'une quelconque des revendications 1 à 10, **caractérisée en ce que** le réservoir (4) est entièrement entouré dans une partie de sa zone périphérique par une couche conductrice de protons et non conductrice de l'hydrogène et dans les autres zones de sa périphérie par une barrière de diffusion de l'hydrogène (2) pour l'hydrogène.

12. Pile à combustible selon l'une quelconque des revendications 1 à 11, **caractérisée en ce que** le réservoir (4) est appliqué sur une face de la couche conductrice de protons et dans laquelle une couche de diffusion d'air auto-respirante est formée comme cathode (7) sur la face opposée à celle-ci, la couche de diffusion d'air auto-respirante étant suffisamment poreuse pour le passage d'air, en particulier pour le passage d'oxygène.

13. Pile à combustible selon l'une quelconque des revendications 1 à 12, **caractérisée en ce que** la cathode (7) arrive jusqu'au substrat (1) latéralement à la couche conductrice de protons, sur au moins une partie de son bord périphérique.

14. Pile à combustible selon l'une quelconque des revendications 1 à 13, **caractérisée en ce qu'**elle comporte un contact anodique (5), qui va d'une zone de bord supérieure du réservoir (4) jusqu'à la surface du substrat (1) via des parties de bord supérieures de la couche de compensation de contrainte (3) et de la barrière de diffusion (2).

15. Agencement monolithique en technologie CMOS avec une pile à combustible intégrée selon l'une quelconque des revendications 1 à 14.
